(19) Europäisches Patentamt European Patent Office Office européen des brevets

(11) **EP 3 618 314 B1**

(12) **EUROPEAN PATENT SPECIFICATION**

(45) Date of publication and mention
of the grant of the patent:
**21.04.2021 Bulletin 2021/16**

(51) Int Cl.:
*H04B 17/18* (2015.01)   *H04B 17/21* (2015.01)
*H04B 17/00* (2015.01)   *H04B 7/06* (2006.01)
*H01Q 3/26* (2006.01)

(21) Application number: **18192183.4**

(22) Date of filing: **03.09.2018**

(54) **CALIBRATION SYSTEM, ANTENNA SYSTEM AND METHOD**

KALIBRIERUNGSSYSTEM, ANTENNENSYSTEM UND VERFAHREN

SYSTÈME D'ÉTALONNAGE, SYSTÈME D'ANTENNE ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.03.2020 Bulletin 2020/10**

(73) Proprietor: **Xilinx, Inc.
San Jose, California 95124 (US)**

(72) Inventors:
 • **Aue, Dr. Volker
  01099 Dresden (DE)**
 • **Pollakis, Dr. Alexandros
  Dresden (DE)**

(74) Representative: **Kehl, Ascherl, Liebhoff & Ettmayr
Patentanwälte Partnerschaft mbB
Emil-Riedel-Straße 18
80538 München (DE)**

(56) References cited:
**EP-A1- 2 911 323      WO-A1-2017/071583
US-A1- 2009 251 368    US-B1- 6 480 153**

## Description

### TECHNICAL FIELD

The invention relates to a calibration system for calibrating a number of receive signal paths of an antenna system. Further, the present invention relates to an antenna system and to a method for calibrating a number of receivers of an antenna system.

### BACKGROUND

Although applicable to any wireless communication system, the present invention will mainly be described in conjunction with the 5th generation of wireless communication networks, also referred to as 5G-Networks.

Today wireless communication networks are widely used for providing voice and data communication to users. Such wireless communication networks, like e.g. LTE based or so called 4G networks, usually comprise a core network and a so-called radio access network or RAN. It is understood, that each of these interrelated networks may comprise a plurality of different elements, modules or units that together provide the required communication capabilities.

As part of the RAN so called eNodeBs or base stations provide the link between the operators' network and the users mobile devices or user equipments (UEs). Usually the eNodeBs will comprise antennas that serve for transmitting outgoing signals to the UEs and for receiving incoming signals from the UEs. Up to now, most commonly passive or active antennas with fixed radiation patterns are used.

However, in modern 5G-Networks such conventional antennas may be replaced by massive MIMO antennas (antennas with a plurality of single antenna elements that may form and steer a plurality of beams at the same time). In such massive MIMO antennas, usually a single transceiver, e.g. a combination of a transmitter and a receiver, is usually used for every antenna element or specific groups of antenna elements.

Most modern digital modems use baseband signal processing to calculate a modulation waveform to be transmitted and to retrieve the data from a received waveform. It is the task of the single transceivers to up-convert a transmit signal from baseband to radio frequency, and to down-convert a signal from radio frequency to baseband.

As indicated above, with the rise of massive MIMO antennas, the number of transceivers as well as the number of signal paths used at the network side (in the base station antennas) increases drastically.

Beamforming depends heavily on exact phase and amplitude shifts for the single signals that are received or emitted. This property is required over the entire bandwidth of the transmit and receive signals. Therefore, for a high-quality beamforming in massive MIMO antennas, the signal paths for the single antenna elements need to be calibrated. Such calibration may e.g. be initially performed during production of the respective massive MIMO antenna. However, further calibration may be necessary during operation of the massive MIMO antenna due to temperature effects, aging effects or the like. Usually calibration is performed by injecting signals into the single signal paths. However, such calibration signals may overlay the primary or operational signals of the wireless transmission system.

Document US 2009/251 368 A1 discloses an array antenna, in which digitally controlled local oscillators may change the phases of the respective output signals in response to respective digital phase control signals.

Document US 6 480 153 A1 discloses a method for determining calibration coefficients for the single signal paths in a smart antenna by injecting a calibration signal vector in the single signal paths and analyzing the output of the signal paths.

Document EP 2 911 323 A1 discloses a self-calibrating smart antenna.

There is a need for an antenna calibration that reduces the influence on signal quality of the primary signals of the wireless transmission system.

### SUMMARY OF THE INVENTION

The above stated problem is solved by the features of the independent claims. It is understood, that independent claims of a claim category may be formed in analogy to the dependent claims of another claim category A calibration system for calibrating a number of receive signal paths, each comprising a receiver, of an antenna system is provided according to claim 1. A method for calibrating a plurality of receive signal paths of an antenna system is provided according to claim 10.

The present invention is based on the finding that transceivers, like e.g. direct-conversion transceivers, are used in modern massive MIMO antennas. Such transceivers may comprise a plurality of different digital and/or analog signal processing elements that may comprise tolerances and temperature dependent characteristics. Further, such direct-conversion transceivers usually do not comprise built in calibration or compensation mechanisms, which allow the calibration while the transceiver is actively used for data transmission at the same time.

It is understood, that although a direct-conversion transceiver may be used here to explain the underlying principle of the present patent application, the present invention may be used with any other type of transceiver or receiver. In the context of the present invention, the term transceiver may therefore refer to any type of device that comprises a transmitter and/or a receiver for RF signals.

An exemplary direct-conversion transceiver may consist of a receiver and a transmitter. The transceiver may also contain the analog-to-digital converters (ADCs) and digital-to-analog converters (DACs) to provide a digital interface towards a baseband processor, e.g. an IQ-interface. The baseband processor may therefore provide an in-phase signal (I-signal) and a quadrature signal (Q-signal) to the transmitter. After converting the digital IQ-signals to analog signal, the transmitter first low-pass filters the analog signals to filter out aliases that come out of DACs. Then, the in-phase component is multiplied by a sinusoidal waveform that comes from a local transmitter RF oscillator. The analog Q-signal is multiplied by a 90 degree-shifted version of the sinusoidal waveform. The multiplied in-phase and quadrature components are then added to form the RF transmit signal. This signal may then be provided e.g. via an amplifier and a RF output to an antenna element.

The RF receiver may work in a similar but reverse order fashion. A direct-conversion transceiver may e.g. employ a low noise amplifier (LNA) at the first input stage of the receiver. The LNA amplifies the RF signal presented by an antenna element at the input of the receiver. The amplified signal is split into two identical signals. The first split signal is multiplied by a sinusoidal waveform that comes from a local receiver RF oscillator (RX LO). The multiplied signal is the so-called in-phase component (I-component) of the received signal. The second split signal is multiplied by a 90 degree-shifted version of the sinusoidal waveform to form the quadrature component (Q-component) of the received signal. Both, in-phase and quadrature components are low pass filtered to filter out any unwanted components of the received signal to avoid distortion through aliasing when sampling the signal. Finally, the filtered in-phase and quadrature components are sampled and analog-to-digital converted to form the digital baseband signal, i.e. the received I-signal and Q-signal.

The present invention may therefore be used with IQ-signals or IQ-receivers. It is however understood, that single-path transceivers, without an I-signal path and a Q-signal path may also be used with the present invention accordingly. It is further understood, that all explanations regarding a calibration signal may refer to a single or non-IQ signal as well as to an IQ-signal, i.e. a signal comprising an I-signal component and a Q-signal component.

Since analog components are used in direct-conversion transceivers, a practical direct conversion transceiver is not ideal. This is also true for other transceiver or receiver technologies. Possible causes of the differences of identical components may include device variation in fabrication, frequency, bandwidth, temperature and aging effects. It is understood, that static factors of device variations can be factory-calibrated.

Since different transceivers may comprise different variations of specific details, the single signal paths of the antenna system, e.g. a massive MIMO antenna, may comprise different phase and/or amplitude behavior or responses when compared to each other. Such differences may however be detrimental to the quality of the beamforming performed in the massive MIMO antenna.

Therefore, the imbalances of the single signal paths of the massive MIMO antenna introduced by dynamic factors, e.g. by frequency or temperature, may however require a continuous re-calibration during run-time to provide a constant performance with the massive MIMO antenna.

If calibration signals are used for calibrating the massive MIMO antenna that overlay the operating signals of the massive MIMO antenna, communication via the massive MIMO antenna may be interrupted or at least the performance may deteriorate.

The present patent application therefore provides the reference signal generator together with the reference beamforming unit to calibrate the receiving signal paths of a massive MIMO antenna. It is understood, that the present invention may be used with dedicated receivers or with the receiver parts of transceivers.

The reference signal generator generates a respective reference signal that will be injected into the signal paths of the respective receivers. In a possible embodiment, the reference signal may e.g. be a sinusoidal signal or the like.

However, prior to injecting the reference signal, the reference beamforming unit creates a dedicated calibration signal for every receiver. The reference beamforming unit splits or duplicates the reference signal to create a calibration signal for every receiver. The reference beamforming unit applies a predetermined beamforming or a beamforming with predetermined beamforming weights to the single calibration signals, such that the calibration signals appear at the receivers like a received RF signal originating from a respective direction of arrival as indicated by the beamforming weights. This means that the reference beamforming unit may tune the phases and the amplitudes of the single calibration signals according to the predetermined beamforming weights for applying the beamforming. The beamforming weights may e.g. be complex beamforming weights, wherein the amplitude of a complex beamforming weight scales the amplitude of the respective calibration signal, and wherein the phase of the respective complex beamforming weight rotates the phase of the respective calibration signal.

The estimation unit acquires then the signals after the receivers process the single calibration signals and determines any deviations or differences of the receivers regarding phase and amplitude (also called gain).

The reference signal generator, the reference beamforming unit, the receivers and the estimation unit may be seen as a type of control or calibration loop or feedback path, that is provided for calibrating the receivers.

It is understood, that the receivers are also coupled to further units of the massive MIMO antenna, e.g. to a receive beamformer or beamforming unit that performs beamforming for the operational or operating signals in the massive MIMO antenna. It is understood, that the terms "operational signals" or "operating signals" refer to the signals that are required for the operation of the communication system in which the massive MIMO antenna is used. In contrast the calibration signals are only required for calibration of the receivers or the receiver signal paths, i.e. the signal paths from the respective antenna or coupling element to the output port of the respective receiver. The information as determined by the estimation unit may then e.g. be used by other components of the massive MIMO antenna, e.g. by the receive beamformer and/or a dedicated compensation unit, to compensate for any phase and/or amplitude shifts that may be present in the single signal paths. The beamformer may then e.g. adapt the beamforming weights or parameters, like phase and gain or amplitude, for the single signal paths accordingly.

With the present invention it is possible to adapt the beamforming of the calibration signals such that the impact of the received calibration signals on the received operating signals, e.g. the distortion, is minimized.

This means, that the calibration signals may e.g. be tuned such that they appear to originate at a location that is regarding the angle of incidence as far away from the origin of the operational signals as possible and as supported by the massive MIMO antenna, especially the respective beamforming units. The beamforming of the calibration signals may e.g. be chosen such that after the beamforming in reception direction is performed in the massive MIMO antenna for the operating signals, the components of single calibration signals in the resulting signal are minimized or even cancel each other out. Therefore, the energy contribution of the calibration signals to the operating signals after the beamformer is minimized or even cancelled out.

It is understood, that the estimation unit may know the beamforming factors or weights of the single calibration signals and may consider these beamforming factors or weights when analyzing the output signals of the receivers.

Therefore, with the present invention, a massive MIMO antenna may be calibrated in receiving direction during normal operation without major deterioration of the operational signals of the wireless communication system.

Further embodiments of the present invention are subject of the further subclaims and of the following description, referring to the drawings.

In an embodiment, the calibration system may comprise a coupling element for every receiver or receive signal path. The coupling elements may be coupled to the reference beamforming unit and may be configured to couple in the respective calibration signal in a RF signal path of the respective receiver or receive signal path.

Coupling elements in this regard may e.g. comprise couplers, like directional couplers. Such directional couplers may e.g. be implemented as coupling lines or traces in a circuit or on the circuit board of the receiver or the respective antenna or receive signal path.

Couplers allow inserting a signal into the signal path between the respective antenna element and the corresponding transceiver, without further influencing the signals received via the antenna element and being transported to the respective receiver or receive signal path. Using directional couplers allows injecting the calibration signals into the respective signal paths with no or only a small part of the injected signals being sent to the respective antenna element.

The coupling elements serve for mixing the calibration signals into the input or RF signal paths of the receivers. On the output side of the receivers, the calibration signals may then be received by the estimation unit for further processing.

In a further embodiment, the calibration system may comprise a reference transmitter arranged between the reference signal generator and the reference beamforming unit, wherein the reference transmitter may be configured to upconvert the reference signal to the operating frequency of the receivers.

The reference signal generator may be a signal source that generates the reference signal with a baseband or intermediate frequency that is lower than the RF frequency of the operating signals or the operating frequency of the receivers.

The reference transmitter may then perform the up-conversion of the reference signal to the operating frequency of the receivers, e.g. around 2.6 GHz for LTE band 40.

It is understood, that the reference transmitter may comprise a digital interface towards the reference signal generator. The reference transmitter may therefore also comprise the digital-to-analog converter(s) required to provide the RF calibration signals to the reference beamforming unit. In another embodiment, the digital-to-analog converter(s) may be provided in the reference signal source. In this embodiment, the reference transmitter may be coupled to the reference transmitter via an analog interface.

In another embodiment, the calibration system may comprise a signal splitter arranged between the reference signal generator and the reference beamforming unit. The signal splitter may be configured to split the reference signal into the calibration signals.

The signal splitter may be a device that accepts a RF signal on the input side and outputs a predefined number of identical output signals. Especially for the task of calibration, it is important that the signal splitter outputs the calibration signals with the known amplitude and phase.

**EP 3 618 314 B1**

It is understood, that the signal splitter may be arranged between the above-mentioned reference transmitter and the reference beamforming unit.

In another embodiment, the reference signal generator may be configured to generate the reference signal as a pseudo noise signal, also called PN-sequence or PN-signal, especially as band-limited pseudo noise signal, and more especially as modulated pseudo-random binary sequence, also called PRBS, more especially with predefined cross-correlation properties.

The reference signal may for example comprise known auto-correlation and a zero cross-correlation. It is understood, that the above term "zero" may also refer to non-ideal calibration signals that comprise a cross-correlation that is as low as possible. The cross-correlation properties avoid or reduce interference between multiple simultaneous measurements.

In a further embodiment, the estimation unit may comprise a correlation receiver comprising a correlator configured to correlate the output signals provided by the receivers each with a correlation sequence that matches the characteristics of the respective calibration signal. The correlation receiver may further comprise an estimator configured to estimate the phases and amplitudes of the output signals provided by the receivers with regard to the respective calibration signals.

It is understood, that in an ideal case all signal paths would result in phases of 0° and the same amplitudes for the output signals of the receivers. However, since the real signal paths are usually not ideal, the resulting phases will probably differ from 0° and the amplitudes of the output signals will be different in amplitudes.

A correlation receiver is especially adequate for use in the calibration system, because the correlation receiver may process signals, especially pseudo noise signals, with very low amplitudes. The amplitudes of such signals may be below the noise level in the antenna system. Signals with such low amplitudes minimize the influence on the operational signals of the wireless system. However, to detect and process such signals, the correlation receiver is required.

The correlation receiver may be provided with a matching correlation sequence for every receiver. The term "matching" refers to the correlation sequence being adequate for detecting the respective calibration signal in the output signal of the respective receiver. The longer the correlation sequences are chosen, the higher the signal-to-noise ration of the correlation result will be. Therefore, the length of the correlation sequences may be chosen such that the signal-to-noise ratio is higher than a predefined threshold value for a given application scenario. This means that the correlation result will mostly depend on the calibration signals and not on the operational signals.

It is understood, that with lower amplitude calibration signals, longer correlation times will be required. However, since the present invention provides means for reducing the influence of the calibration signals on the operational signals of the wireless communication system, the amplitudes of the calibration signals may be increased such, that the influence of the calibration signals on the output signal of a beamformer in receive direction of a massive MIMO antenna is below a specific threshold level. As will be explained below, for specific application scenarios, the calibration signals are beamformed such that they cancel out in the receiving beamformer of the massive MIMO antenna.

The mathematical description may be as follows: The calibration signal may be denoted as $\vec{r}$. The reference beamforming weights may be denoted as complex column vector $\vec{v}$. The calibration signal splitter may further considered to be ideal. The output of the reference beamformer is $\vec{c} = \vec{v}\,r$. The directive coupler may be modeled as $\vec{y} = \vec{s} + \vec{c}$, where $\vec{s}$ is the received signal at the antenna elements. The receive beamformer may be modeled as the scalar product $x = \vec{w}\,\vec{y}$, where $\vec{w}$ is a row vector of complex weights of the receive beamformer. The receive signal after the receive beamformer can therefore be re-written as $x = \vec{w}\,\vec{s} + \vec{w}\,\vec{v}\,r$. The calibration signals cancel out if $\vec{w}\,\vec{v} = 0$, which can be achieve for $\vec{w} = [1^0 \ldots 1^{N-1}]$ and $\vec{v} = [-1^0 \ldots -1^{N-1}]$ for an even number of antennas $N$.

In the estimation unit the effects on phases and amplitudes of the calibration signals introduced by the calibration signal chain, i.e. the reference signal generator and/or the reference beamforming unit and/or the coupling elements and/or the reference transmitter and/or the signal splitter, may be known. These values may e.g. be determined in a factory calibration step.

As alternative, a closed loop may be provided that only includes the components of the calibration signal chain, e.g. from the reference signal generator to the estimation unit. Such a closed loop may be used to determine the effects on phases and amplitudes of the calibration signals introduced by the calibration signal chain. The estimation unit may e.g. alternatingly determine the effects on phase and amplitude for the calibration signal chain and for the receivers in predetermined intervals or when specific criteria are fulfilled. Such criteria may e.g. refer to a change in temperature with a predetermined temperature amplitude (it is understood, that respective temperature sensors may be provided), a specific amount of time passed (the calibration signal chain may e.g. be analyzed every several seconds, minutes or hours), and/or other physical variables that may be recorded with a respective sensor.

With the knowledge of the effects on phases and amplitudes of the calibration signals introduced by the calibration signal chain, the correlation receiver may then subtract these known effects from the phases and amplitudes that result for the single receivers or receive signal paths in the correlation receiver. The results of this subtraction may then be taken as the effects on phases and amplitudes of the calibration signals introduced by the respective receiver or RF frontend. It is understood, that here the term "receiver" or "RF frontend" may refer to the full reception signal chain or receive signal path from the coupling elements to the output ports of the receivers.

The result of the subtraction may then e.g. be provided to a signal processing unit or the receive beamformer in the antenna system, e.g. a massive MIMO antenna, that comprises the receivers. The signal processing unit or the receive beamformer may then adapt the beamforming weights for the single receivers accordingly.

In a further embodiment, the beamforming unit may comprise passive components for beamforming the calibration signals, especially wires or traces of different lengths for the single calibration signals. In addition or as alternative, the beamforming unit may comprise mechanical phase shifters for beamforming the calibration signals. As further alternative or in addition, the beamforming unit may comprise a digital beamforming processor for beamforming the calibration signals.

Passive components like wires or traces of different lengths and resistors for the single calibration signals allow performing a static beamforming with very little effort. Such passive components may therefore especially be used if the application scenario of the respective antenna system, e.g. a massive MIMO antenna, provides a fixed preferred direction for the beamforming of the calibration signals.

Mechanical phase shifters may e.g. be implemented as mechanical elements that allow tuning the distance of the receivers or the respective antenna elements to the couplers. To this end, the couplers may e.g. be mechanically moved alongside the signal trace between the antenna element and the receiver. As further alternative, phase shifters may be provided between the antenna elements and the position of the coupling elements, wherein that additional phase shifter may tune the distances or signal paths between the antenna elements and the respective couplers.

The digital beamforming processor may perform beamforming in the digital domain with full flexibility for beamforming the calibration signals. In such an embodiment, the reference signal generator may be provided as digital signal generator, e.g. a function, especially in the digital beamforming processor. The digital beamforming processor may then comprise a respective digital-to-analog converter for every receiver and respective transmitters may be provided.

With the digital beamforming processor, the calibration signals may always be tuned according to the current direction of arrival of the operational signals such that the influence on the operational signals is minimized.

If the digital beamforming processor is to react on currently used beamforming weights of the receive beamformer, a respective interface may be provided between the digital beamforming processor and the receive beamformer of the antenna system.

In another embodiment, the beamforming weights in the reference beamforming unit may be provided such, that the calibration signals cancel out at a receive beamformer of the antenna system, especially when the receive beamformer applies beamforming weights to the output signals of the receivers that are designed to maximize the signal strength at boresight.

The antenna system may e.g. receive signals from a limited range of preferred directions. This range may be defined by the tilt range of the antenna system, which defines the steering range in both horizontal as well as vertical direction. The impact of the calibration signals on the received signal may then be canceled out by carefully chosen beamforming weights in the reference beamforming unit.

If e.g. the antenna system is built symmetrically, and the signal paths from the antenna elements that all reside in the same plane to the couplers are made identical, then the phases and amplitudes of the calibration signals injected at the couplers may be designed such that the calibration signal components cancel out each other at the combiner of the receive beamformer when the combiner applies predefined beamforming weights, also called weighting vector $\vec{w}$,

to the received signal, e.g. a weighting vector $\vec{w}$ that is designed to maximize the signal energy at boresight.

In this embodiment, all reference signals may be injected with equal amplitude into the receive paths of the receivers. All the receive paths may be designed to have equal gain and equal phase from respective antenna element to the receive beamformer. In particular this means that the signals from the antenna elements reach the couplers with equal phase shifts and amplitude shifts.

The phases of the reference beamforming weights may be denoted by $\phi_0$, $\phi_1$, ..., $\phi_{N-1}$ and defined as

$$\phi_n = 2\pi \frac{n}{N}$$ for n = 0 ... (N-1), where N is the number of receive paths or antenna elements or receivers.

When the antenna system, e.g. the receive beamformer in the antenna system, uses weights to form a beam at boresight, i.e. beamforming weights of zero phase and equal amplitude, the reference signals as defined above cancel out at the receive beamformer: $$\sum_{n=0}^{N-1} e^{\iota\phi_n} = 0.$$

Since the phases of the analog calibration signals result from different run-times of the signals on the circuit boards, and the phases are coupled to the wavelength of the modulated calibration signals, the phases may be adjusted to a predetermined target frequency. In embodiments, the minimal deterioration operational signals caused by the calibration may be limited to about 10 % of the operating frequency. It is further possible, to use a configurable reference beamforming unit, that may be adapted to use different frequencies. Likewise, when the receive paths are not perfectly calibrated, i.e. phases and amplitudes are not equal, the reference signals may also not add entirely to zero. However, the overall error due to a frequency deviation from predetermined target frequency may be negligible.

Further, if the beam at the receive beamformer is steered away from boresight, different weights with different phases and amplitudes are applied by the receive beamformer and the calibration signals may not entirely cancel out each other.

To mitigate the effects of the receive beamformer steering away from boresight, the calibration system may be provided with information about the beamforming weights being currently used in the receive beamformer. The calibration system only performs the calibration when the receive beamformer uses beamforming weights in boresight or in a predefined region around boresight.

In another embodiment, the beamforming weights in the reference beamforming unit may be provided such that the calibration signals components minimize at a beamformer of the antenna system, especially when the beamformer applies any of a number of predefined sets of beamforming weights to the output signals of the receivers.

The predefined sets of beamforming weights or weighting vectors may refer to weighting vectors for preferred directions of reception of the antenna system, e.g. in the antenna systems steering range. Therefore, the beamforming weights in the reference beamforming unit may be chosen in a direction that is not covered by the antenna's steering range or tilt angle.

The particular reference beamforming weights may be determined e.g. by an optimization algorithm. The optimization is based on the expected probability of occurrence of beams for a certain deployment of the massive MIMO antenna. This relates to a statistics of beamforming weights which is used to optimize the reference beamforming weights for.

## BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:

Fig. 1 shows a block diagram of an embodiment of a calibration system according to the present invention;

Fig. 2 shows a block diagram of an embodiment of an antenna system according to the present invention;

Fig. 3 shows a block diagram of an embodiment of a reference beamforming section according to the present invention;

Fig. 4 shows a diagram of a wave front received by an antenna array;

Fig. 5 shows a diagram of an antenna array;

Fig. 6 shows a block diagram of a receive beamformer; and

Fig. 7 shows a flow diagram of an embodiment of a calibration method according to the present invention.

In the figures like reference signs denote like elements unless stated otherwise.

**DETAILED DESCRIPTION OF THE DRAWINGS**

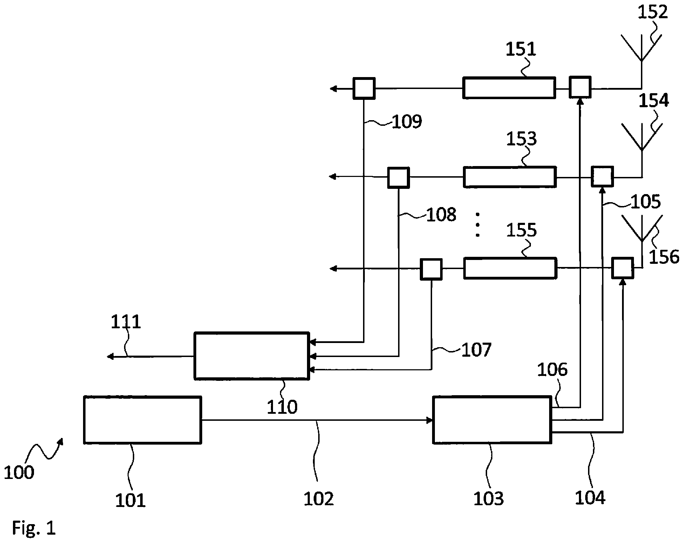

Fig. 1 shows a block diagram of an embodiment of a calibration system 100 for an antenna system with three receivers 151, 153, 155. It is understood, that the number of three receivers 151, 153, 155 is just exemplarily chosen and that any other number of receivers is possible. More receivers are hinted at by three dots.

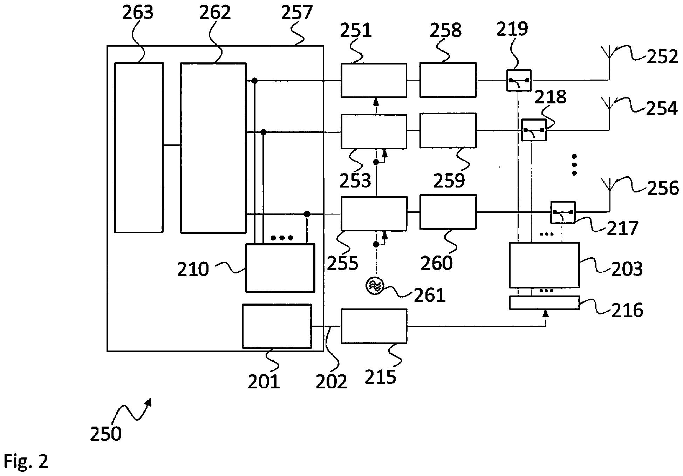

The calibration system 100 comprises a reference signal generator 101 that is coupled to a reference beamforming unit 103. The reference beamforming unit 103 is coupled the receivers 151, 153, 155 on the RF input side of the receivers 151, 153, 155, e.g. by coupling elements (see Fig. 2). Further, an estimation unit 110 is coupled to respective output interfaces of the receivers 151, 153, 155.

The reference signal generator 101 generates a reference signal 102 and provides the reference signal 102 to the reference beamforming unit 103. The reference beamforming unit 103 duplicates the reference signal 102 into a dedicated calibration signal 104, 105, 106 for every one of the receivers 151, 153, 155 and applies a beamforming with predetermined beamforming weights to the calibration signals 104, 105, 106. The reference beamforming unit 103 then provides each one of the receivers 151, 153, 155 with the respectively beamformed calibration signal 104, 105, 106.

The beamformed calibration signals 104, 105, 106 will be processed in the receivers 151, 153, 155 and will be provided to the estimation unit 110. The estimation unit 110 determines amplitude deviations and/or phase deviations 111 of the receivers 151, 153, 155 based on output signals 107, 108, 109 provided by the receivers 151, 153, 155.

It is understood, that although not shown, the antenna system may comprise further components, as will be shown in Fig. 2. The output signals 107, 108, 109 may for example be provided to a signal processing unit in the antenna system.

Fig. 2 shows a block diagram of an embodiment of an antenna system 250. The antenna system 250 comprises three antenna elements 252, 254, 256 that are each coupled via a respective RF frontend 258, 259, 260 to respective receivers 251, 253, 255. The receivers 251, 253, 255 are each provided with a clock signal from a clock source 261. It is understood, that the number of three receive signal paths, i.e. paths comprising an antenna element 252, 254, 256, a RF frontend 258, 259, 260 and a receiver 251, 253, 255, is just exemplarily chosen and that more receive signal paths are possible (hinted at by three dots).

The output signals of the receivers 251, 253, 255 are provided to a signal processing unit 257. In the signal processing unit 257, the output signals are processed by a receive beamformer 262. The resulting beamformed signal is then provided to an interface unit 263, e.g. to a baseband interface unit or BBU.

The calibration system (not referenced separately) comprises the reference signal generator 201 that is provided in the signal processing unit 257. The reference signal generator 201 is coupled to a reference transmitter 215. The reference transmitter 215 is coupled to a splitter 216 that is coupled to the reference beamforming unit 203. The reference beamforming unit 203 is coupled to coupling elements, here directional couplers 217, 218, 219 that are provided at the signal lines between the respective antenna elements 252, 254, 256 and the respective RF frontends 258, 259, 260. The estimation unit 210 is provided in the signal processing unit 257 and is coupled to the signal lines between the receivers 251, 253, 255 and the receive beamformer 262.

For calibrating the receive signal paths of the antenna system 250, the reference signal generator 201 generates the reference signal 202 and provides the reference signal 202 to the reference transmitter 215. The reference transmitter 215 upconverts the reference signal 202 to the operating or RF frequency of the receivers 251, 252, 253 and provides the upconverted reference signal 202 to splitter 216. In splitter 216, the upconverted reference signal 202 is split into multiple calibration signals (not separately referenced), i.e. one for every one of the receivers 251, 253, 255. The single calibration signals are then beamformed in the reference beamforming unit 203 and are injected via directional couplers 217, 218, 219 into the respective signal paths.

After being processed by the receivers 251, 253, 255, the output signals of the receivers 251, 253, 255 are provided to the estimation unit 210. The estimation unit 210 then processes the output signals of the receivers 251, 253, 255 to determine amplitude deviations and/or phase deviations 111 of the receivers 251, 253, 255.

The estimation unit 210 may for example comprise a correlation receiver comprising a correlator configured to correlate the output signals provided by the receivers 251, 253, 255 each with a correlation sequence that matches the characteristics of the respective calibration signal. The estimation unit 210 may further comprise an estimator configured to estimate the phases and amplitudes of the output signals provided by the receivers 251, 253, 255 with regard to the respective calibration signals.

It is understood, that the output interfaces of the receivers 251, 253, 255 may be digital interfaces and that the receivers 251, 253, 255 may comprise the respective analog-to-digital converters.

The combination of the single output signals by the receive beamformer 262 may therefore take place in the digital domain. In this case, the receive beamformer 262 takes the output signals from the receivers 251, 252, 253, performs the respective phase shifts and scales the amplitude accordingly, prior to adding the different output signals to form a single beamformed output signal.

In an alternative embodiment, the output interfaces of the receivers 251, 253, 255 may be analog interfaces and the required analog-to-digital converters may be provided in the receive beamformer 262 and the estimation unit 210.

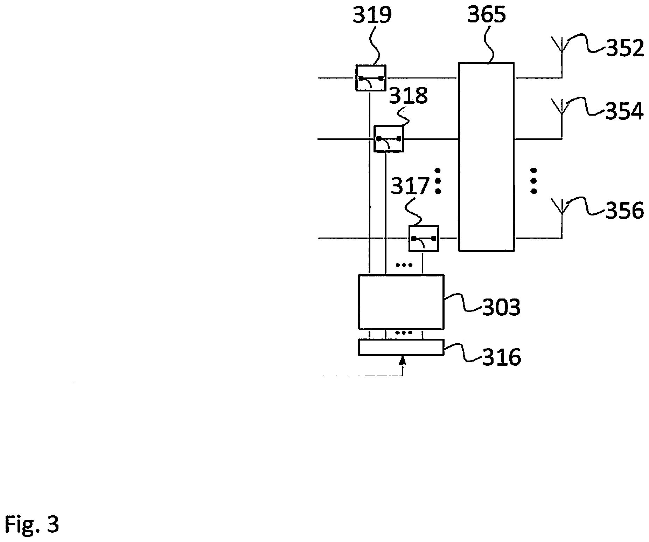

Fig. 3 shows a block diagram of an embodiment of a reference beamforming section according to the present invention. The reference beamforming section comprises the reference beamforming unit 303 and further comprises an antenna beamformer 365. It is understood, that Fig. 3 also shows three exemplary receive signal paths and that more signal paths are possible (hinted at by three dots). A massive MIMO antenna or smart antenna may for example comprise 64 receive signal paths.

The three receive signal paths may e.g. be the receive signal paths of the antenna system 250 as shown in Fig. 2. Each receive signal path therefore comprises an antenna element 352, 354, 356. The reference beamforming unit 303 is provided after the splitter 316 and provides beamformed calibration signals to the receive signal paths after the antenna elements 352, 354, 356 via couplers 317, 318, 319.

The antenna beamformer 365 is provided between the antenna elements 352, 354, 356 and the couplers 317, 318, 319.

With the antenna beamformer 365 the amplitude and the phase between the signals originating from the antenna elements 352, 354, 356 and the calibration signals being coupled into the receive signal paths may be tuned as required, e.g. by controlling the distances or selecting signal paths between the antenna elements 352, 354, 356 and the couplers 317, 318, 319.

It is understood, that the antenna beamformer 365 may be used as stand-alone beamformer of the calibration system. It is also understood, that hybrid configurations as shown in Fig. 3 with the antenna beamformer 365 and the reference beamforming unit 303 are also possible.

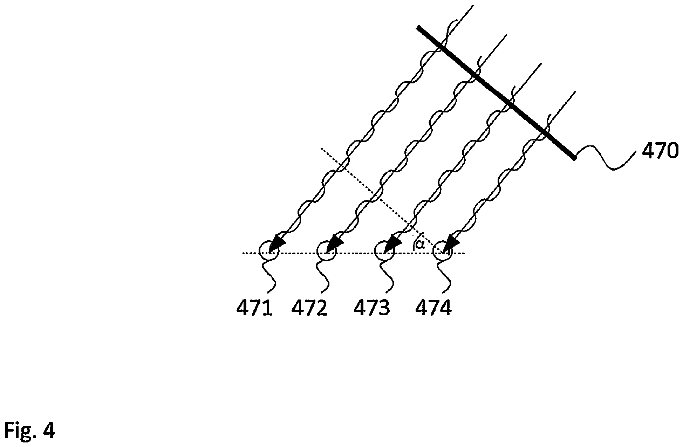

Fig. 4 shows a diagram of a wavefront 470 received by a linear antenna array with four antenna elements 471, 472, 473, 474.

The received signal, i.e. the wavefront 470, is received from a direction indicated by angle a. It can be seen that in direction of the angle $\alpha$ the signals are all aligned, i.e., the signals add constructively in this direction.

It can also be seen, that the length of the signal path to the single antenna elements 471, 472, 473, 474 increases from right to left because of the incident angle $\alpha$. This means that the signal arrives at antenna element 474 first and at antenna element 471 last.

It is important that the signals received by the individual antenna elements 471, 472, 473, 474 add constructively when combining them in the receive beamformer. Therefore, the phase and amplitude for each receive path must be carefully controlled, and imbalances regarding phase and amplitude of the single receive paths should be known.

As already indicated above, the calibration system 100 serves for detecting imbalances in the single receive signal paths. These detected imbalances may then be considered in the receive beamformer.

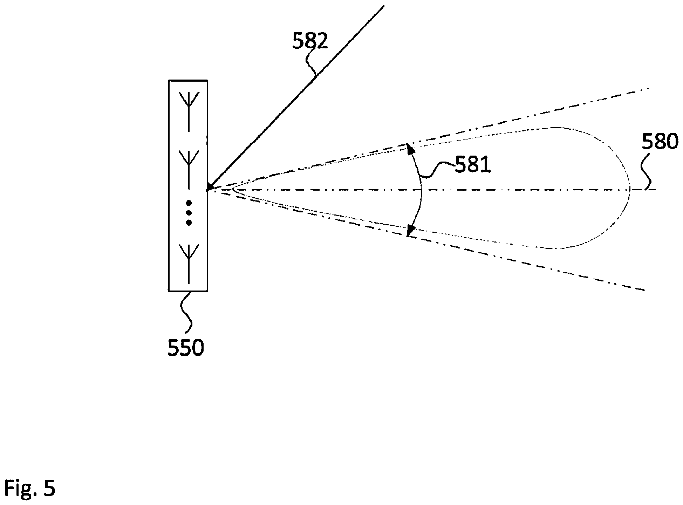

Fig. 5 shows a diagram of an antenna array 550 in which the boresight 580 and a tilt angle 581 is indicated for the antenna array 550. The boresight 580 represents the direction of a 0° vertical angle and a 0° horizontal angle from the plane in which the antenna elements of the antenna array 550 are arranged.

The tilt angle 581 represents the angle in which the direction of main sensitivity of the antenna array 550 may be steered by the respective receive beamformer.

In Fig. 5 a possible direction of arrival 582 is shown, which represents a possible direction of arrival 582 which may be used to determine the beamforming weights for the calibration signals.

It can be seen, that the possible direction of arrival 582 is outside of the tilt angle 581. Therefore, during operation of the antenna array 550 no operational signals will ever arrive from the direction of arrival 582 or at least the receive beamformer will never try to receive a signal from that direction. Therefore, the direction of arrival 582 may be used for beamforming calibration signals to minimize the interference with any operational signals.

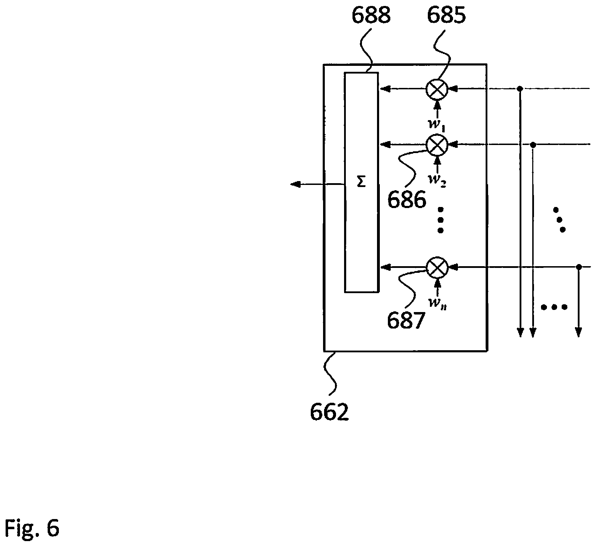

Fig. 6 shows a block diagram of a receive beamformer 662. The receive beamformer 662 takes n input signals from the receivers of the antenna system (not shown). Each signal may be a baseband signal represented by its in-phase and quadrature component (IQ-signal). The receive beamformer 662 comprises a multiplier 685, 686, 687 for every input signal and an adder 688 for combining the multiplied signals.

The multipliers 685, 686, 687 multiply each input signal by a complex weight $\overline{w_i}$ , where the amplitude of $\overline{w_i}$ scales the amplitude of the $i$-th received signal and the phase of the weight rotates the phase of the $\overline{i}$-th received signal, respectively. The adder 688 then adds the multiplied signals to form a beamformed output signal.

For sake of clarity in the following description of the method-based Figure the reference signs used above in the description of apparatus-based Figures will be maintained.

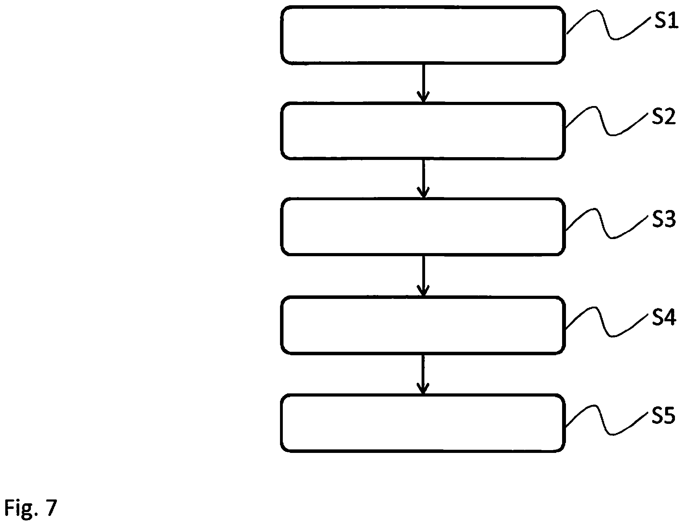

Fig. 7 shows a flow diagram of an embodiment of a calibration method for calibrating a number of receivers 151, 153, 155, 251, 253, 255 of an antenna system 250, 550.

The method comprises generating S1 a single reference signal 102, 202, duplicating S2 the reference signal 102, 202 into a calibration signal 104, 105, 106 for every one of the receivers 151, 153, 155, 251, 253, 255, applying

S3 a beamforming with predetermined beamforming weights to the calibration signals 104, 105, 106, providing S4 each one of the receivers 151, 153, 155, 251, 253, 255 with the respectively beamformed calibration signal 104, 105, 106, and determining S5 amplitude deviations and/or phase deviations 111 of the receivers 151, 153, 155, 251, 253, 255 based on output signals 107, 108, 109 provided by the receivers 151, 153, 155, 251, 253, 255 via respective output interfaces.

Generating S1 may comprise generating the reference signal 102, 202 as a pseudo noise signal, especially as band-limited pseudo noise signal, and more especially as modulated pseudo-random binary sequence, especially with predefined cross-correlation properties. In addition or as alternative providing S4 may comprise coupling in the respective calibration signal 104, 105, 106 in a RF signal path of the respective receiver 151, 153, 155, 251, 253, 255, especially with respective coupling elements 217, 218, 219, 317, 318, 319.

The predetermined beamforming weights may be provided such that the calibration signals 104, 105, 106 cancel out at a receive beamformer of the antenna system 250, 550 when the receive beamformer applies beamforming weights to the output signals 107, 108, 109 of the receivers 151, 153, 155, 251, 253, 255 that are designed to maximize the signal strength at boresight 580. Alternatively, the predetermined beamforming weights may be provided such that the calibration signals components minimize at a beamformer of the antenna system 250, 550 when the beamformer applies any of a number of predefined sets of beamforming weights to the output signals 107, 108, 109 of the receivers 151, 153, 155, 251, 253, 255.

The method may further comprise upconverting the reference signal 102, 202 to the operating frequency of the receivers 151, 153, 155, 251, 253, 255, especially with a reference transmitter 215, after generating S1 the reference signal 102, 202.

The method may also comprise splitting the reference signal 102, 202 into the calibration signals 104, 105, 106, especially with a signal splitter 216, 316, after generating S1 or upconverting the reference signal 102, 202.

Determining S5 may comprise correlating the output signals 107, 108, 109 provided by the receivers 151, 153, 155, 251, 253, 255 each with a correlation sequence that matches the characteristics of the respective calibration signal 104, 105, 106, and estimating the phases and amplitudes of the output signals 107, 108, 109 provided by the receivers 151, 153, 155, 251, 253, 255 with regard to the respective calibration signals 104, 105, 106.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

The present invention provides a calibration system 100 for calibrating a number of receivers 151, 153, 155, 251, 253, 255 according to claim 1. In addition, the present invention provides a respective antenna system 250, 550 according to claim 9 and a method for calibrating a number of receivers 151, 153, 155, 251, 253, 255 of an antenna system 250, 550 according to claim 10.

**List of reference signs**

| | |
|---|---|
| 100 | calibration system |
| 101, 201 | reference signal generator |
| 102, 202 | reference signal |
| 103, 203, 303 | reference beamforming unit |
| 104, 105, 106 | calibration signal |
| 107, 108, 109 | output signal |
| 110, 210 | estimation unit |
| 111 | amplitude deviation and/or phase deviation |

| | |
|---|---|
| 215 | reference transmitter |
| 216, 316 | splitter |
| 217, 218, 219, 317, 318, 319 | coupler |

| | |
|---|---|
| 250, 550 | antenna system |
| 151, 153, 155, 251, 253, 255 | receiver |
| 152, 154, 156, 252, 254, 256 | antenna element |

| | |
|---|---|
| 352, 354, 356 | antenna element |
| 257 | signal processing unit |
| 258, 259, 260 | RF frontend |
| 261 | clock source |
| 262, 662 | receive beamformer |
| 263 | interface unit |
| | |
| 365 | antenna beamformer |
| | |
| 470 | wavefront |
| 471, 472, 473, 474 | antenna element |
| 580 | boresight |
| 581 | tilt range |
| 582 | direction of arrival |
| 685, 686, 687 | multiplier |
| 688 | adder |
| | |
| S1, S2, S3, S4 | method steps |

**Claims**

1. Calibration system (100) for calibrating a number of receive signal paths, each comprising a receiver (151, 153, 155, 251, 253, 255), of an antenna system (250, 550), the calibration system (100) comprising:

   a reference signal generator (101, 201) that is configured to generate a reference signal (102, 202),
   a reference beamforming unit (103, 203, 303) that is coupled to the reference signal generator (101, 201) and that is configured to duplicate the reference signal (102, 202) into a calibration signal (104, 105, 106) for every one of the receivers (151, 153 155, 251, 253, 255) and to apply a beamforming with predetermined beamforming weights to the calibration signals (104, 105, 106) and to provide each one of the receivers (151, 153, 155, 251, 253, 255) with the respectively beamformed calibration signal (104, 105, 106), and
   an estimation unit (110, 210) that is coupled to respective output interfaces of the receivers (151, 153, 155, 251, 253, 255) and that is configured to determine amplitude deviations and/or phase deviations (111) of the receivers (151, 153, 155, 251 253, 255) based on output signals (107, 108, 109) provided by the receivers (151, 153, 155, 251, 253, 255) via the respective output interfaces,
   **characterised in that** the reference beamforming unit (103, 203, 303) is configured to select the beamforming weights such that the calibration signals (104, 105, 106) cancel out at a receive beamformer of the antenna system (250, 550) when the receive beamformer is configured to apply beamforming weights to the output signals (107, 108, 109) of the receivers (151, 153, 155, 251, 253, 255) that are designed to maximize the signal strength at boresight (580), and
   the calibration system (100) is configured to only perform the calibration when the beamformer uses beamforming weights in boresight or in a predefined region around boresight.

2. Calibration system (100) according to claim 1, comprising a coupling element (217, 218, 219, 317, 318, 319) for every one of the receivers (151, 153, 155, 251, 253, 255), the coupling elements (217, 218, 219, 317, 318, 319) being coupled to the reference beamforming unit (103, 203, 303) and being configured to couple in the respective calibration signal (104, 105, 106) in a RF signal path of the respective receiver (151, 153, 155, 251, 253, 255).

3. Calibration system (100) according to anyone of the preceding claims, comprising a reference transmitter (215) arranged between the reference signal generator (101, 201) and the reference beamforming unit (103, 203, 303), wherein the reference transmitter (215) is configured to upconvert the reference signal (102, 202) to the operating frequency of the receivers (151, 153, 155, 251, 253, 255).

4. Calibration system (100) according to anyone of the preceding claims, comprising a signal splitter (216, 316) arranged between the reference signal generator (101, 201) and the reference beamforming unit (103, 203, 303) and configured to split the reference signal (102, 202) into the calibration signals (104, 105, 106).

5. Calibration system (100) according to anyone of the preceding claims, wherein the reference signal generator (101, 201) is configured to generate the reference signal (102, 202) as a pseudo noise signal, especially as band-limited pseudo noise signal, and more especially as modulated pseudo-random binary sequence, especially with predefined cross-correlation properties.

6. Calibration system (100) according to anyone of the preceding claims, wherein the estimation unit (110, 210) comprises a correlation receiver comprising a correlator configured to correlate the output signals (107, 108, 109) provided by the receivers (151, 153, 155, 251, 253, 255) each with a correlation sequence that matches the characteristics of the respective calibration signal (104, 105, 106), and comprising an estimator configured to estimate the phases and amplitudes of the output signals (107, 108, 109) provided by the receivers (151, 153, 155, 251, 253, 255) with regard to the respective calibration signals (104, 105, 106).

7. Calibration system (100) according to anyone of the preceding claims, wherein the beamforming unit comprises passive components for beamforming the calibration signals (104, 105, 106), especially wires or traces of different lengths for the single calibration signals (104, 105, 106), and/or
wherein the beamforming unit comprises mechanical phase shifters for beamforming the calibration signals (104, 105, 106), and/or
wherein the beamforming unit comprises a digital beamforming processor for beamforming the calibration signals (104, 105, 106).

8. Calibration system according to any one of the preceding claims, wherein the reference beamforming unit (103, 203, 303) is configured to use beamforming weights of zero phase and equal amplitude when using beamforming weights in boresight or in a predefined region around boresight.

9. Antenna system (250, 550) comprising:

a plurality of antenna elements (152, 154, 156, 252, 254, 256, 352, 354, 356),
a receiver (151, 153, 155, 251, 253, 255) for every one of the antenna elements (152, 154, 156, 252, 254, 256, 352, 354, 356) that is coupled to the respective antenna element (152, 154, 156, 252, 254, 256, 352, 354, 356), and
a calibration system (100) according to any one of the preceding claims.

10. Method for calibrating a number of receive signal paths, each comprising a receiver (151, 153, 155, 251, 253, 255), of an antenna system (250, 550), the method comprising:

generating (S1) a single reference signal (102, 202),
duplicating (S2) the reference signal (102, 202) into a calibration signal (104, 105, 106) for every one of the receivers (151, 153, 155, 251, 253, 255) applying (S3) a beamforming with predetermined beamforming weights to the calibration signals (104, 105, 106),
providing (S4) each one of the receivers (151, 153, 155, 251, 253, 255) with the respectively beamformed calibration signal (104, 105, 106), and
determining (S5) amplitude deviations and/or phase deviations (111) of the receivers (151, 153, 155, 251, 253, 255) based on output signals (107, 108, 109) provided by the receivers (151, 153, 155, 251, 253, 255) via respective output interfaces
**characterized in that** the predetermined beamforming weights are provided such that the calibration signals (104, 105, 106) cancel out at a receive beamformer of the antenna system (250, 550) when the receive beamformer applies beamforming weights to the output signals (107, 108, 109) of the receivers (151, 153, 155, 251, 253, 255) that are designed to maximize the signal strength at boresight (580), and
the method for calibrating a number of receive signal paths is only performed when the beamformer uses beamforming weights in boresight or in a predefined region around boresight.

11. Method according to claim 10, wherein generating comprises generating the reference signal (102, 202) as a pseudo noise signal, especially as band-limited pseudo noise signal, and more especially as modulated pseudo-random binary sequence, especially with predefined cross-correlation properties, and/or
wherein providing comprises coupling in the respective calibration signal (104, 105, 106) in a RF signal path of the respective receiver (151, 153, 155, 251, 253, 255), especially with respective coupling elements (217, 218, 219, 317, 318, 319).

12. Method according to anyone of the preceding claims 10 and 11, comprising upconverting the reference signal (102, 202) to the operating frequency of the receivers (151, 153, 155, 251, 253, 255), especially with a reference transmitter (215), and/or

comprising splitting the reference signal (102, 202) into the calibration signals (104, 105, 106), especially with a signal splitter (216, 316).

13. Method according to anyone of the preceding claims 10 to 12, wherein determining comprises correlating the output signals (107, 108, 109) provided by the receivers (151, 153, 155, 251, 253, 255) each with a correlation sequence that matches the characteristics of the respective calibration signal (104, 105, 106), and estimating the phases and amplitudes of the output signals (107, 108, 109) provided by the receivers (151, 153, 155, 251, 253, 255) with regard to the respective calibration signals (104, 105, 106).

14. Method according to any one of claims 10 to 13, wherein using beamforming weights to maximize the signal strength at boresight comprises using beamforming weights of zero phase and equal amplitude.

**Patentansprüche**

1. Kalibriersystem (100) zum Kalibrieren einer Anzahl von Empfangssignalpfaden, die jeweils einen Empfänger (151, 153, 155, 251, 253, 255) aufweisen, eines Antennensystems (250, 550), wobei das Kalibriersystem (100) aufweist
einen Referenzsignalgenerator (101, 201), der zum Erzeugen eines Referenzsignals (102, 202) konfiguriert ist,
eine Referenzstrahlformungseinheit (103, 203, 303), die mit dem Referenzsignalgenerator (101, 201) gekoppelt ist und die konfiguriert ist, das Referenzsignal (102, 202) in ein Kalibriersignal (104, 105, 106) für jeden der Empfänger (151, 153, 155, 251, 253, 255) zu duplizieren und auf die Kalibriersignale (104, 105, 106) eine Strahlformung mit vorgegebenen Strahlformungsgewichten anzuwenden und jedem der Empfänger (151, 153, 155, 251, 253, 255) das jeweils strahlgeformte Kalibriersignal (104, 105, 106) bereitzustellen, und
eine Schätzeinheit (110, 210), die mit jeweiligen Ausgangsschnittstellen der Empfänger (151, 153, 155, 251, 253, 255) gekoppelt ist und die konfiguriert ist, um Amplitudenabweichungen und/oder Phasenabweichungen (111) der Empfänger (151, 153, 155, 251, 253, 255) basierend auf Ausgangssignalen (107, 108, 109), die von den Empfängern (151, 153, 155, 251, 253, 255) über die jeweiligen Ausgangsschnittstellen bereitgestellt werden, zu bestimmen
**dadurch gekennzeichnet, dass**
die Referenzstrahlformungseinheit (103, 203, 303) so konfiguriert ist, dass sie die Strahlformungsgewichte so auswählt, dass sich die Kalibriersignale (104, 105, 106) an einem Empfangsstrahlformer des Antennensystems (250, 550) auslöschen, wenn der Empfangsstrahlformer so konfiguriert ist, dass er Strahlformungsgewichte auf die Ausgangssignale (107, 108, 109) der Empfänger (151, 153, 155, 251, 253, 255) anwendet, die so ausgelegt sind, dass sie die Signalstärke in Achsrichtung (580) maximieren, und
das Kalibriersystem (100) so konfiguriert ist, dass es die Kalibrierung nur dann durchführt, wenn der Strahlformer Strahlformungsgewichte in Achsrichtung oder in einem vordefinierten Bereich um die Achsrichtung herum verwendet.

2. Kalibriersystem (100) gemäß Anspruch 1, das ein Kopplungselement (217, 218, 219, 317, 318, 319) für jeden der Empfänger (151, 153, 155, 251, 253, 255) aufweist, wobei die Kopplungselemente (217, 218, 219, 317, 318, 319) mit der Referenzstrahlformungseinheit (103, 203, 303) gekoppelt sind und zum Einkoppeln des jeweiligen Kalibriersignals (104, 105, 106) in einen HF-Signalpfad des jeweiligen Empfängers (151, 153, 155, 251, 253, 255) konfiguriert sind.

3. Kalibriersystem (100) gemäß einem der vorhergehenden Ansprüche, umfassend einen Referenzsender (215), der zwischen dem Referenzsignalgenerator (101, 201) und der Referenzstrahlformungseinheit (103, 203, 303) angeordnet ist, wobei der Referenzsender (215) konfiguriert ist, das Referenzsignal (102, 202) auf die Betriebsfrequenz der Empfänger (151, 153, 155, 251, 253, 255) hochzuwandeln.

4. Kalibriersystem (100) gemäß einem der vorhergehenden Ansprüche, umfassend einen Signalsplitter (216, 316), der zwischen dem Referenzsignalgenerator (101, 201) und der Referenzstrahlformungseinheit (103, 203, 303) angeordnet und konfiguriert ist, um das Referenzsignal (102, 202) in die Kalibriersignale (104, 105, 106) aufzuteilen.

5. Kalibriersystem (100) gemäß einem der vorhergehenden Ansprüche, wobei der Referenzsignalgenerator (101, 201) konfiguriert ist, das Referenzsignal (102, 202) als Pseudorauschsignal, insbesondere als bandbegrenztes Pseudorauschsignal, und insbesondere als modulierte pseudozufällige Binärsequenz, insbesondere mit vordefinierten Kreuzkorrelationseigenschaften, zu erzeugen.

EP 3 618 314 B1

6. Kalibriersystem (100) gemäß einem der vorhergehenden Ansprüche, wobei die Schätzeinheit (110, 210) einen Korrelationsempfänger aufweist, der einen Korrelator aufweist, der so konfiguriert ist, dass er die von den Empfängern (151, 153, 155, 251, 253) bereitgestellten Ausgangssignale (107, 108, 109, 255) bereitgestellten Ausgangssignale (107, 108, 109) jeweils mit einer Korrelationssequenz zu korrelieren, die mit den Merkmalen des jeweiligen Kalibriersignals (104, 105, 106) übereinstimmt, und einen Schätzer aufweist, der so konfiguriert ist, dass er die Phasen und Amplituden der von den Empfängern (151, 153, 155, 251, 253, 255) bereitgestellten Ausgangssignale (107, 108, 109) in Bezug auf die jeweiligen Kalibriersignale (104, 105, 106) schätzt.

7. Kalibriersystem (100) gemäß einem der vorhergehenden Ansprüche, wobei die Strahlformungseinheit passive Komponenten zur Strahlformung der Kalibriersignale (104, 105, 106) aufweist, insbesondere Drähte oder Leiterbahnen unterschiedlicher Länge für die einzelnen Kalibriersignale (104, 105, 106), und/oder
wobei die Strahlformungseinheit mechanische Phasenschieber zur Strahlformung der Kalibriersignale (104, 105, 106) aufweist, und/oder
wobei die Strahlformungseinheit einen digitalen Strahlformungsprozessor zur Strahlformung der Kalibriersignale (104, 105, 106) aufweist.

8. Kalibriersystem gemäß einem der vorhergehenden Ansprüche, wobei die Referenzstrahlformungseinheit (103, 203, 303) so konfiguriert ist, dass sie bei der Verwendung von Strahlformungsgewichten in Achsrichtung oder in einem vordefinierten Bereich um die Achsrichtung herum Strahlformungsgewichte mit Nullphase und gleicher Amplitude verwendet.

9. Antennensystem (250, 550), das Folgendes aufweist:

eine Vielzahl von Antennenelementen (152, 154, 156, 252, 254, 256, 352, 354, 356),
einen Empfänger (151, 153, 155, 251, 253, 255) für jedes der Antennenelemente (152, 154, 156, 252, 254, 256, 352, 354, 356), der mit dem jeweiligen Antennenelement (152, 154, 156, 252, 254, 256, 352, 354, 356) gekoppelt ist, und
ein Kalibriersystem (100) gemäß einem der vorhergehenden Ansprüche.

10. Verfahren zum Kalibrieren einer Anzahl von Empfangssignalpfaden, die jeweils einen Empfänger (151, 153, 155, 251, 253, 255) aufweisen, eines Antennensystems (250, 550), wobei das Verfahren aufweist:

Erzeugen (S1) eines einzelnen Referenzsignals (102, 202),
Duplizieren (S2) des Referenzsignals (102, 202) in ein Kalibriersignal (104, 105, 106) für jeden der Empfänger (151, 153, 155, 251, 253, 255),
Anwenden (S3) einer Strahlformung mit vorbestimmten Strahlformungsgewichten auf die Kalibrierungssignale (104, 105, 106),
Bereitstellen (S4) des jeweiligen strahlgeformten Kalibriersignals (104, 105, 106) an jeden der Empfänger (151, 153, 155, 251, 253, 255), und
Bestimmen (S5) von Amplitudenabweichungen und/oder Phasenabweichungen (111) der Empfänger (151, 153, 155, 251, 253, 255) auf der Grundlage von Ausgangssignalen (107, 108, 109), die von den Empfängern (151, 153, 155, 251, 253, 255) über jeweilige Ausgangsschnittstellen bereitgestellt werden,
**dadurch gekennzeichnet, dass**
die vorbestimmten Strahlformungsgewichte so bereitgestellt werden, dass sich die Kalibriersignale (104, 105, 106) an einem Empfangsstrahlformer des Antennensystems (250, 550) auslöschen, wenn der Empfangsstrahlformer Strahlformungsgewichte auf die Ausgangssignale (107, 108, 109) der Empfänger (151, 153, 155, 251, 253, 255) anwendet, die so ausgelegt sind, dass sie die Signalstärke in Achsrichtung (580) maximieren, und
das Verfahren zum Kalibrieren einer Anzahl von Empfangssignalpfaden nur dann durchgeführt wird, wenn der Strahlformer Strahlformungsgewichte in Achsrichtung oder in einem vordefinierten Bereich um die Achsrichtung herum verwendet.

11. Verfahren gemäß Anspruch 10, wobei das Erzeugen das Erzeugen des Referenzsignals (102, 202) als Pseudo-Rauschsignal, insbesondere als bandbegrenztes Pseudo-Rauschsignal, und insbesondere als moduliertes Pseudo-Zufalls-Binärfolge, insbesondere mit vorgegebenen Kreuzkorrelationseigenschaften, aufweist, und/oder
wobei das Bereitstellen ein Einkoppeln des jeweiligen Kalibriersignals (104, 105, 106) in einen HF-Signalpfad des jeweiligen Empfängers (151, 153, 155, 251, 253, 255), insbesondere mit jeweiligen Koppelelementen (217, 218, 219, 317, 318, 319), aufweist.

14

**12.** Verfahren gemäß einem der vorhergehenden Ansprüche 10 und 11, das aufweist: Hochmischen des Referenzsignals (102, 202) auf die Betriebsfrequenz der Empfänger (151, 153, 155, 251, 253, 255), insbesondere mit einem Referenzsender (215), und/oder
das Referenzsignal (102, 202) in die Kalibriersignale (104, 105, 106) aufzuspalten, insbesondere mit einem Signalsplitter (216, 316).

**13.** Verfahren gemäß einem der vorhergehenden Ansprüche 10 bis 12, wobei das Bestimmen aufweist, dass die von den Empfängern (151, 153, 155, 251, 253, 255) bereitgestellten Ausgangssignale (107, 108, 109) jeweils mit einer Korrelationssequenz korreliert werden, die mit den Eigenschaften des jeweiligen Kalibriersignals (104, 105, 106) übereinstimmt, und Schätzen der Phasen und Amplituden der von den Empfängern (151, 153, 155, 251, 253, 255) bereitgestellten Ausgangssignale (107, 108, 109) in Bezug auf die jeweiligen Kalibriersignale (104, 105, 106).

**14.** Verfahren gemäß einem der Ansprüche 10 bis 13, wobei die Verwendung von Strahlformungsgewichten zur Maximierung der Signalstärke in Achsrichtung die Verwendung von Strahlformungsgewichten mit Nullphase und gleicher Amplitude aufweist.

**Revendications**

**1.** Système d'étalonnage (100) pour étalonner un nombre de chemins de signal de réception, chacun comprenant un récepteur (151, 153, 155, 251, 253, 255), d'un système d'antenne (250, 550), le système d'étalonnage (100) comprenant :

un générateur de signal de référence (101, 201) qui est configuré pour générer un signal de référence (102, 202), une unité de formation de faisceau de référence (103, 203, 303) qui est couplée au générateur de signal de référence (101, 201) et qui est configurée pour dupliquer le signal de référence (102, 202) en un signal d'étalonnage (104, 105, 106) pour chacun des récepteurs (151, 153, 155, 251, 253, 255) et pour appliquer une formation de faisceau avec des poids prédéterminés de formation de faisceau aux signaux d'étalonnage (104, 105, 106) et pour fournir à chacun des récepteurs (151, 153, 155, 251, 253, 255) le signal d'étalonnage respectivement soumis à la formation de faisceau (104, 105, 106), et
une unité d'estimation (110, 210) qui est couplée à des interfaces de sortie respectives des récepteurs (151, 153, 155, 251, 253, 255) et qui est configurée pour déterminer des écarts d'amplitude et/ou des écarts de phase (111) des récepteurs (151, 153, 155, 251, 253, 255) sur la base de signaux de sortie (107, 108, 109) délivrés par les récepteurs (151, 153, 155, 251, 253, 255) via les interfaces de sortie respectives,
**caractérisé en ce que**
l'unité de formation de faisceau de référence (103, 203, 303) est configurée pour sélectionner les poids de formation de faisceau de manière que les signaux d'étalonnage (104, 105, 106) s'annulent au niveau d'un dispositif de formation de faisceau de réception du système d'antenne (250, 550) quand le dispositif de formation de faisceau de réception est configuré pour appliquer des poids de formation de faisceau aux signaux de sortie (107, 108, 109) des récepteurs (151, 153, 155, 251, 253, 255) qui sont conçus pour maximiser l'intensité de signal au niveau de la ligne de visée (580), et
le système d'étalonnage (100) est configuré pour effectuer uniquement l'étalonnage quand le dispositif de formation de faisceau utilise des poids de formation de faisceau dans la ligne de visée ou dans une région prédéfinie autour de la ligne de visée.

**2.** Système d'étalonnage (100) selon la revendication 1, comprenant un élément de couplage (217, 218, 219, 317, 318, 319) pour chacun des récepteurs (151, 153, 155, 251, 253, 255), les éléments de couplage (217, 218, 219, 317, 318, 319) étant couplés à l'unité de formation de faisceau de référence (103, 203, 303) et étant configurés pour coupler en entrée le signal d'étalonnage (104, 105, 106) respectif dans un chemin de signal RF du récepteur (151, 153, 155, 251, 253, 255) respectif.

**3.** Système d'étalonnage (100) selon l'une quelconque des revendications précédentes, comprenant un émetteur de référence (215) agencé entre le générateur de signal de référence (101, 201) et l'unité de formation de faisceau de référence (103, 203, 303), dans lequel l'émetteur de référence (215) est configuré pour élever en fréquence le signal de référence (102, 202) à la fréquence de fonctionnement des récepteurs (151, 153, 155, 251, 253, 255).

**4.** Système d'étalonnage (100) selon l'une quelconque des revendications précédentes, comprenant un séparateur de signal (216, 316) agencé entre le générateur de signal de référence (101, 201) et l'unité de formation de faisceau de référence (103, 203, 303) et configuré pour séparer le signal de référence (102, 202) en les signaux d'étalonnage (104, 105, 106).

5. Système d'étalonnage (100) selon l'une quelconque des revendications précédentes, dans lequel le générateur de signal de référence (101, 201) est configuré pour générer le signal de référence (102, 202) comme un signal de pseudo-bruit, en particulier comme un signal de pseudo-bruit à bande limitée, et plus particulièrement comme une séquence binaire pseudo-aléatoire modulée, en particulier avec des propriétés de corrélation croisée prédéfinies.

6. Système d'étalonnage (100) selon l'une quelconque des revendications précédentes, dans lequel l'unité d'estimation (110, 210) comprend un récepteur de corrélation comprenant un corrélateur configuré pour mettre en corrélation les signaux de sortie (107, 108, 109) délivrés par les récepteurs (151, 153, 155, 251, 253, 255) chacun avec une séquence de corrélation qui correspond aux caractéristiques du signal d'étalonnage (104, 105, 106) respectif, et comprenant un estimateur configuré pour estimer les phases et les amplitudes des signaux de sortie (107, 108, 109) délivrés par les récepteurs (151, 153, 155, 251, 253, 255) pour ce qui concerne les signaux d'étalonnage (104, 105, 106) respectifs.

7. Système d'étalonnage (100) selon l'une quelconque des revendications précédentes, dans lequel l'unité de formation de faisceau comprend des composants passifs pour la formation de faisceau des signaux d'étalonnage (104, 105, 106), en particulier des fils ou pistes de différentes longueurs pour les signaux d'étalonnage (104, 105, 106) individuels, et/ou
dans lequel l'unité de formation de faisceau comprend des déphaseurs mécaniques pour la formation de faisceau des signaux d'étalonnage (104, 105, 106), et/ou
dans lequel l'unité de formation de faisceau comprend un processeur de formation de faisceau numérique pour la formation de faisceau des signaux d'étalonnage (104, 105, 106).

8. Système d'étalonnage selon l'une quelconque des revendications précédentes, dans lequel l'unité de formation de faisceau de référence (103, 203, 303) est configurée pour utiliser des poids de formation de faisceau de phase nulle et d'amplitude égale lors de l'utilisation de poids de formation de faisceau dans la ligne de visée ou dans une région prédéfinie autour de la ligne de visée.

9. Système d'antenne (250, 550) comprenant :

une pluralité d'éléments d'antenne (152, 154, 156, 252, 254, 256, 352, 354, 356),
un récepteur (151, 153, 155, 251, 253, 255) pour chacun des éléments d'antenne (152, 154, 156, 252, 254, 256, 352, 354, 356), qui est couplé à l'élément d'antenne (152, 154, 156, 252, 254, 256, 352, 354, 356) respectif, et
un système d'étalonnage (100) selon l'une quelconque des revendications précédentes.

10. Procédé d'étalonnage d'un nombre de chemins de signal de réception, chacun comprenant un récepteur (151, 153, 155, 251, 253, 255), d'un système d'antenne (250, 550), le procédé comprenant :

la génération (S1) d'un unique signal de référence (102, 202),
la duplication (S2) du signal de référence (102, 202) en un signal d'étalonnage (104, 105, 106) pour chacun des récepteurs (151, 153, 155, 251, 253, 255),
l'application (S3) d'une formation de faisceau avec des poids prédéterminés de formation de faisceau aux signaux d'étalonnage (104, 105, 106),
la fourniture (S4) à chacun des récepteurs (151, 153, 155, 251, 253, 255) du signal d'étalonnage respectivement soumis à la formation de faisceau (104, 105, 106), et
la détermination (S5) d'écarts d'amplitude et/ou d'écarts de phase (111) des récepteurs (151, 153, 155, 251, 253, 255) sur la base de signaux de sortie (107, 108, 109) délivrés par les récepteurs (151, 153, 155, 251, 253, 255) via les interfaces de sortie respectives,
**caractérisé en ce que**
les poids de formation de faisceau prédéterminés sont fournis de manière que les signaux d'étalonnage (104, 105, 106) s'annulent au niveau d'un dispositif de formation de faisceau de réception du système d'antenne (250, 550) quand le dispositif de formation de faisceau de réception applique des poids de formation de faisceau aux signaux de sortie (107, 108, 109) des récepteurs (151, 153, 155, 251, 253, 255) qui sont conçus pour maximiser l'intensité de signal au niveau de la ligne de visée (580), et
le procédé d'étalonnage d'un nombre de chemins de signal de réception est effectué uniquement quand le dispositif de formation de faisceau utilise des poids de formation de faisceau dans la ligne de visée ou dans une région prédéfinie autour de la ligne de visée.

11. Procédé selon la revendication 10, dans lequel la génération comprend la génération du signal de référence (102, 202) comme un signal de pseudo-bruit, en particulier comme un signal de pseudo-bruit à bande limitée, et plus particulièrement comme une séquence binaire pseudo-aléatoire modulée, en particulier avec des propriétés de corrélation croisée prédéfinies, et/ou
dans lequel la fourniture comprend le couplage du signal d'étalonnage (104, 105, 106) respectif dans un chemin de signal RF du récepteur (151, 153, 155, 251, 253, 255) respectif, en particulier avec des éléments de couplage (217, 218, 219, 317, 318, 319) respectifs.

12. Procédé selon l'une quelconque des revendications précédentes 10 et 11, comprenant l'élévation en fréquence du signal de référence (102, 202) à la fréquence de fonctionnement des récepteurs (151, 153, 155, 251, 253, 255), en particulier avec un émetteur de référence (215), et/ou
comprenant la séparation du signal de référence (102, 202) en les signaux d'étalonnage (104, 105, 106), en particulier avec un séparateur de signal (216, 316).

13. Procédé selon l'une quelconque des revendications précédentes 10 à 12, dans lequel la détermination comprend la mise en corrélation des signaux de sortie (107, 108, 109) délivrés par les récepteurs (151, 153, 155, 251, 253, 255) chacun avec une séquence de corrélation qui correspond aux caractéristiques du signal d'étalonnage (104, 105, 106) respectif, et l'estimation des phases et des amplitudes des signaux de sortie (107, 108, 109) délivrés par les récepteurs (151, 153, 155, 251, 253, 255) pour ce qui concerne les signaux d'étalonnage (104, 105, 106) respectifs.

14. Procédé selon l'une quelconque des revendications 10 à 13, dans lequel l'utilisation de poids de formation de faisceau pour maximiser l'intensité de signal au niveau de la ligne de visée comprend l'utilisation de poids de formation de faisceau de phase nulle et d'amplitude égale.

Fig. 1

Fig. 2

Fig. 3

470

471 472 473 474

Fig. 4

582

580

581

550

Fig. 5

688    685

Σ

$w_1$

$w_2$

686

$w_n$

687

662

Fig. 6

Fig. 7

**EP 3 618 314 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009251368 A1
- US 6480153 A1
- EP 2911323 A1